(19) Europäisches Patentamt
European Patent Office
Office européen des brevets

(11) **EP 4 806 847 A1**

(12) **EUROPEAN PATENT APPLICATION**

(43) Date of publication:
**16.09.2026 Bulletin 2026/38**

(21) Application number: **26157984.1**

(22) Date of filing: **11.02.2026**

(51) International Patent Classification (IPC):
*C01G 53/506* (2025.01) *H01M 4/00* (2006.01)

(52) Cooperative Patent Classification (CPC):
**C01G 53/506;** C01P 2004/61; C01P 2006/17; H01M 4/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.02.2025 JP 2025024246**

(71) Applicant: **Toyota Jidosha Kabushiki Kaisha**
**Toyota-shi, Aichi-ken 471-8571 (JP)**

(72) Inventors:
- **OHSAWA, Ryosuke**
  **TOYOTA-SHI, AICHI-KEN, 471-8571 (JP)**
- **KINOSHITA, Taku**
  **TOYOTA-SHI, AICHI-KEN, 471-8571 (JP)**

(74) Representative: **Cabinet Beau de Loménie**
**103, rue de Grenelle / CS 90800**
**75340 Paris Cedex 07 (FR)**

# (54) CATHODE ACTIVE MATERIAL, CATHODE MIXTURE, BATTERY, AND METHOD FOR PRODUCING CATHODE ACTIVE MATERIAL

(57) A main object of the present disclosure is to provide a cathode active material capable of reducing resistance and reducing increase rate of cycle resistance. The present disclosure achieves the object by providing a cathode active material including: a plurality of crystalline primary particles containing Li, TM, which is a transition metal, and O, wherein the cathode active material is an aggregate configured by the plurality of the primary particle; and there are a compound A containing La, Ni, and O, and a compound B containing Li, W, and O, on a surface of the primary particles.

FIG. 1

10
1

EP 4 806 847 A1

## Description

### Technical Field

The present disclosure relates to a cathode active material, a cathode mixture, a battery, and a method for producing the cathode active material.

### Background Art

In recent years, the development of a battery has been actively carried out. For example, the development of a battery used for battery electric vehicles (BEV), plug-in hybrid electric vehicles (PHEV), or hybrid electric vehicles (HEV) has been advanced in the automobile industry. As a cathode active material used for a battery, an active material including a transition metal such as Ni, Co, and Mn has been known.

For example, Patent Literature 1 discloses a W-containing high nickel ternary cathode material of which chemical formula is $Li_aNi_xCo_yMn_{1-x-y}W_bM_cO_2$, wherein the high nickel ternary cathode material includes a spherical secondary particle and a single crystalline particle at the same time, a W element is basically not included inside the single crystalline particle, and a W element is doped to the spherical secondary particle.

Patent Literature 2 discloses a single crystalline multi-element cathode material, wherein a ratio of a length of a longest diagonal line to a length of a shortest diagonal line of a single crystal particle of the single crystalline multi-element cathode material measured by a SEM is defined as a roundness R, and the R is 1 or more, $D_{10}$, $D_{50}$, and $D_{90}$ of the single crystal particle of the single crystalline multi-element cathode material satisfy $K_{90} = (D_{90} - D_{10})/ D_{50}$, and a product of $K_{90}$ and R is 1.20 to 1.40.

### Citation List

#### Patent Literatures

Patent Literature 1: Japanese Unexamined Patent Publication (JP-A) No. 2022-542774
Patent Literature 2: Japanese Unexamined Patent Publication (JP-A) No. 2024-511223

### Summary of Disclosure

#### Technical Problem

From a viewpoint of improving performance of a battery, reduction of resistance and reduction of increase rate of cycle resistance has been required. The present disclosure has been made in view of the above circumstances, and a main object thereof is to provide a cathode active material capable of reducing resistance and reducing increase rate of cycle resistance.

#### Solution to Problem

[1] A cathode active material comprising:
a crystalline primary particle containing Li, TM, which is a transition metal, and O, wherein

- the cathode active material is an aggregate configured by a plurality of the primary particle; and
- there are a compound A containing La, Ni, and O, and a compound B containing Li, W, and O, on a surface of the primary particle.

[2] The cathode active material according to [1], wherein a peak is present in a range of 65 nm or more and 300 nm or less in a pore diameter distribution obtained by a mercury press-in method.
[3] The cathode active material according to [2], wherein the peak is present in a range of 80 nm or more and 220 nm or less in the pore diameter distribution.
[4] The cathode active material according to any one of [1] to [3], wherein a particle size of the primary particle in the aggregate is 0.5 μm or more.

[5] The cathode active material according to any one of [1] to [4], wherein the primary particle contains at least one kind of Ni, Co and Mn as the TM.

[6] The cathode active material according to any one of [1] to [5], wherein the primary particle includes a layered rock salt type crystal structure.

[7] The cathode active material according to any one of [1] to [6], wherein at least one of the compound A and the compound B is present in an interface between adjacent the primary particle in the aggregate.

[8] The cathode active material according to any one of [1] to [7], wherein the compound A is in a particle shape.

[9] The cathode active material according to any one of [1] to [8], wherein the compound B is in a film shape.

[10] A cathode mixture comprising the cathode active material according to any one of [1] to [9].

[11] A battery comprising a cathode active material layer containing a cathode active material, an anode active material layer containing an anode active material, and an electrolyte layer arranged between the cathode active material layer and the anode active material layer, wherein

the cathode active material layer contains the cathode mixture according to [10].

[12] A method for producing the cathode active material according to any one of [1] to [9], the method comprising:

a first burning step of burning a first mixture that includes: a transition metal hydroxide containing the TM; a Li source; and a W source, at a temperature $T_1$ to obtain a first burned body,
a second burning step of burning the first burned body at a temperature $T_2$ to obtain a second burned body, and
a third burning step of burning a second mixture, which is produced by adding a La source to a crushed product of the second burned body, at a temperature $T_3$ to obtain a third burned body, wherein
at least one of the first mixture and the second mixture contains a Ni source,
the temperature $T_2$ in the second burning step is higher than the temperature $T_1$ in the first burning step,
the temperature $T_3$ in the third burning step is lower than the temperature $T_2$ in the second burning step,
the temperature $T_1$ is 500°C or more and 800°C or less,
the temperature $T_2$ is 600°C or more and 1000°C or less, and
the temperature $T_3$ is 400°C or more and 600°C or less.

Advantageous Effects of Disclosure

The present disclosure exhibits an effect of providing a cathode active material capable of reducing resistance and reducing increase rate of cycle resistance.

Brief Description of Drawings

FIG. 1 is a schematic cross-sectional view exemplifying the cathode active material in the present disclosure.
FIG. 2 is a schematic cross-sectional view exemplifying the primary particle in the present disclosure.
FIG. 3 is a schematic cross-sectional view exemplifying the battery in the present disclosure.
FIG. 4 is a flow chart exemplifying the method for producing the cathode active material in the present disclosure.

Description of Embodiments

Embodiments will be explained below with reference to drawings. However, the present disclosure is enforceable in a variety of different forms, and thus should not be taken as is limited to the contents described in the embodiments exemplified as below. Also, the drawings may show width, thickness, and shape of each part schematically comparing to the actual form in order to explain more clearly in some cases; however, it is merely an example, and thus does not limit the interpretation.

A. Cathode active material

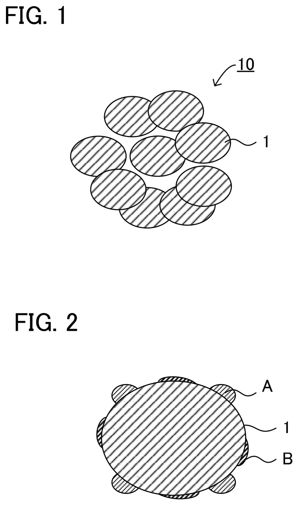

FIG. 1 is a schematic cross-sectional view exemplifying the cathode active material in the present disclosure. FIG. 2 is a schematic cross-sectional view exemplifying the cathode active material in the present disclosure. As shown in FIG. 1, cathode active material 10 includes crystalline primary particle 1 containing Li, TM, which is a transition metal, and O. Also, the cathode active material 10 is an aggregate configured by a plurality of the primary particles 1. Also, as shown in FIG. 2, there are a compound A containing La, Ni, and O, and a compound B containing Li, W, and O, on a surface of the primary particle.

According to the present disclosure, the compound A (compound containing La, Ni and O) with excellent electron

conductivity is present on the surface of the primary particle, and thus the reduction of resistance can be achieved. Also, in the present disclosure, the compound B (compound containing Li, W and O) with excellent ion conductivity is present on the surface of the primary particle, and thus, similarly the reduction of resistance can be achieved. Further, since the cathode active material in the present disclosure includes an aggregate configured by a plurality of the primary particles, reduction of increase rate of cycle resistance can be achieved.

Here, as a cathode active material, a polycrystalline active material and a single crystalline active material have been conventionally known. In the polycrystalline active material, a plurality of the primary particles (extremely minute primary particle) is usually packed in a dense state. Meanwhile, in the single crystalline active material, the primary particle with large particle diameter does not aggregate, and is present as one independent particle. Although the single crystalline active material is not easily cracked during charge and discharge and is superior in terms of durability compared to the polycrystalline active material, the specific surface area is large, and thus the resistant component is accumulated by repeating charging and discharging, and the resistance increase over time easily occurs.

In the present disclosure, a plurality of the primary particles configures the aggregate. As a result, the specific surface area can be made smaller compared to that of the primary particle alone. As a result, the accumulation of the resistant component by repeating charging and discharging can be inhibited. In other words, effect of achieving the reduction of increase rate of cycle resistance can be obtained. This effect is remarkably exhibited when the particle size of the primary particle is large as described above.

In the present disclosure, as described later, in a pore diameter distribution obtained by a mercury press-in method, a peak is preferably present in a range of 65 nm or more and 300 nm or less. In other words, it is preferable to adjust the extent of the aggregate of the primary particle to the extent where the peak is present in the above range. In specific, as shown in FIG. 1, it is preferable that the minute void (void having a pore diameter of 65 nm or more and 300 nm or less) is present inside the aggregate of the primary particle 1. When the minute void is present, particularly when a liquid electrolyte is used, effect such that ion conductivity inside the aggregate improves can be obtained.

Also, in Example 3 of Patent Literature 1 described above, a cathode material represented by $Li_{1.0029}Ni_{0.83}Co_{0.11}Mn_{0.06}W_{0.0009}La_{0.002}O_2$ is disclosed. In more specific, it is described that a mixture including a precursor A including Ni, Co, and Mn but not including W, a precursor B including Ni, Co, Mn, and W, LiOH, and $La_2O_3$, is burned at a high temperature of 880°C. However, Patent Literature 1 neither describes nor suggests about the compound A (compound containing La, Ni, and O) in the present disclosure.

Also, Patent Literature 2 described above discloses a cathode material represented by $Li_{1+a}(Ni_xCo_yMn_zG_b)M_cO_{2-d}$, wherein G is one kind or a multiple kinds of Ti, W, V, Ta, Zr, La, Ce, Er, Sr, Si, Al, B, Mg, Co, F, and Y. In other words, La is disclosed as one of the options of G. However, Patent Literature 2 does not disclose Examples using La at all.

1. Primary particle

The primary particle in the present disclosure is a crystalline particle containing Li, TM, which is a transition metal, and O. Examples of the crystal structure of the primary particle may include a layered rock salt type and a spinel type, and the layered rock salt type is preferable. Also, the primary particle may include a crystal structure belonging to a space group R-3m.

The primary particle contains Li, TM, which is a transition metal, and O. The primary particle may contain one kind of the transition metal, may contain two kinds of the transition metal, may contain three kinds of the transition metal, and may contain four or more kinds of the transition metal.

The transition metal is a metal belonging to the 3rd to the 11th groups in the periodic table. The transition metal included in the primary particle may be a metal belonging to the 3rd period, the 4th period, or the 5th period. Examples of the transition metal may include Ti, V, Cr, Mn, Fe, Co, Ni, Zr, Nb, La, and W.

The primary particle preferably contains at least Ni. The reason therefor is to obtain a cathode active material with excellent capacity properties. The ratio of Ni included in the primary particle when all the transition metals (TM) included in the primary particle is 1 part by mol is, for example, 0.25 parts by mol or more, may be 0.33 parts by mol or more, may be 0.50 parts by mol or more, may be 0.75 parts by mol or more, may be 0.80 parts by mol or more, and may be 0.90 parts by mol or more. The capacity properties improve when the ratio of Ni is increased.

The primary particle may or may not contain Co. The ratio of Co included in the primary particle when all the transition metals (TM) included in the primary particle is 1 part by mol is, for example, 0 part by mol or more, may be 0.05 parts by mol or more, and may be 0.10 parts by mol or more. Meanwhile, the ratio of Co included in the primary particle is, for example, 0.40 parts by mol or less, and may be 0.20 parts by mol or less.

The primary particle may or may not contain Mn. The ratio of Mn included in the primary particle when all the transition metals (TM) included in the primary particle is 1 part by mol is, for example, 0 part by mol or more, may be 0.05 parts by mol or more, and may be 0.10 parts by mol or more. Meanwhile, the ratio of Mn included in the primary particle is, for example, 0.40 parts by mol or less, and may be 0.20 parts by mol or less.

The primary particle preferably contains at least one kind of Ni, Co, and Mn. The total ratio of Ni, Co, and Mn

included in the primary particle when all the transition metals (TM) included in the primary particle is 1 part by mol is, for example, 0.80 parts by mol or more, may be 0.90 parts by mol or more, and may be 0.95 parts by mol or more. Incidentally, "the total of Ni, Co, and Mn" includes the case where the ratio of one kind or two kinds of Ni, Co, and Mn is 0.

The primary particle may contain other metal $M^1$ (including semimetal) other than Li and the TM, in addition to Li and the TM. Examples of the other metal $M^1$ may include metals belonging to the 12th to the 14th groups in the periodic table. Examples of the metals belonging to the 12th to the 14th groups may include Zn, Al, Si, Ga, Ge, In, and Sn.

The composition of the primary particle is not particularly limited, but it may be a composition represented by a general formula $Li_xNa_aCo_bMn_cO_y$, in which $0.1 \leq x \leq 1.5$, $0.5 \leq a \leq 1.0$, $0 \leq b \leq 0.3$, $0 \leq c \leq 0.3$, $a+b+c = 1.0$, and $1.5 \leq y \leq 2.1$.

The "x" may be 0.4 or more, 0.6 or more, 0.8 or more, 1.0 or more, or 1.05 or more, and may be 1.4 or less, or 1.2 or less.

The "y" may be 1.6 or more, 1.7 or more, 1.8 or more, or 1.9 or more, and may be 2.0 or less.

The "a" may be 0.6 or more, 0.7 or more, 0.8 or more, or 0.85 or more, and may be 0.9 or less.

The "b" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

The "c" may be 0.01 or more, 0.02 or more, 0.03 or more, 0.04 or more, 0.05 or more, 0.06 or more, 0.07 or more, or 0.075 or more, and may be 0.25 or less, 0.20 or less, 0.15 or less, 0.10 or less, 0.09 or less, or 0.08 or less.

2. Compound A

The compound A in the present disclosure contains La, Ni, and O. The compound A usually has high electron conductivity, and thus the reduction in resistance may be achieved when the compound A is present on the surface of the primary particle. The compound A may be directly arranged, or may be arranged interposing another layer (another compound), on the surface of the primary particle, but the former is preferable.

The compound A contains at least La, Ni, and O. The compound A may be configured by only La, Ni, and O, and may further contain additional element. Examples of the additional element may include Li. In other words, the compound A may or may not contain Li. Examples of the composition of the compound A may include $La_aNi_bO_c$, wherein $0.8 \leq a \leq 1.2$, $0.8 \leq b \leq 1.2$, $2.8 \leq c \leq 3.2$. For example, $LaNiO_3$ is a typical Perovskite composition, and has excellent electron conductivity. Other examples of the composition of the compound A may include $La_aLi_bNi_cO_d$, wherein $3.5 \leq a \leq 4.5$, $0.5 \leq b \leq 1.5$, $0.5 \leq c \leq 1.5$, and $7.5 \leq d \leq 8.5$. For example, $La_4LiNiO_8$ is known to have excellent electron conductivity, and presumed to have a crystal phase similar to Perovskite.

The compound A may be crystalline, and may be amorphous, but the former is preferable. Excellent electron conductivity is obtained thereby. "Compound being crystalline" means that a peak derived from a targeted compound is confirmed by an X-ray diffraction using a CuK$\alpha$ ray. Meanwhile, "compound being amorphous" means that a peak derived from a targeted compound is not confirmed by an X-ray diffraction using a CuK$\alpha$ ray. Incidentally, when the targeted compound is amorphous, not a peak but a halo pattern may be observed.

The compound A preferably includes a crystal phase of Perovskite, or a crystal phase similar to Perovskite. The compound A preferably includes the crystal phase of at least one of $LaNiO_3$ and $La_4LiNiO_8$. Excellent electron conductivity is obtained thereby. Incidentally, the crystal phase includes a crystal phase in which a part of the constituent atoms (such as a part of O atom) is deficient, and a crystal phase in which a part of the constituent atoms (such as a part of La atom) is exceedingly present.

The compound A is preferably in a particle shape. "The compound A is in a particle shape" means that, in a cross-section image of the primary particle, when $L_1$ designates a length of the compound A in a normal direction of the surface of the primary particle, and $L_2$ designates a length of the compound A in a direction perpendicular to the normal direction, a ratio $L_2/L_1$, which is a ratio of $L_2$ to $L_1$ is 3.0 or less. The cross-section image of the primary particle is, for example, a SEM cross-section image.

The ratio of La included in the compound A when all the transition metals included in the primary particle is 1 part by mol is, for example, 0.001 parts by mol or more, may be 0.003 parts by mol or more, and may be 0.005 parts by mol or more. Meanwhile, the ratio of La included in the compound A is, for example, 0.100 parts by mol or less, may be 0.080 parts by mol or less, and may be 0.060 parts by mol or less.

The coverage of the compound A to the primary particle is not particularly limited, but for example, it is 10% or more and 90% or less, may be 20% or more and 80% or less, and may be 30% or more and 70% or less. The coverage of the compound A may be obtained by, for example, an outermost surface analysis with an XPS (X-ray spectroscopy method). For example, when the primary particle contains Ni, Co, and Mn as the transition metal TM, the La amount and each TM amount (Ni amount, Co amount, and Mn amount) are obtained by the outermost surface analysis with XPS, and La/(La + TM) can be regarded as the coverage. The coverage of compounds B and C can be obtained in the same manner. Also, the electron conductivity of the compound A is usually higher than the electron conductivity of $La_2O_3$. The electron conductivity of the compound A at 25°C is, for example, $5.0 * 10^{-4}$ S/cm or more, and may be $1.0 * 10^{-3}$ S/cm or more. Also, the compound A (compound containing La, Ni, and O) is arranged on a surface of the primary particle. The primary particle

may or may not contain La.

3. Compound B

The cathode active material in the present disclosure may include a compound B containing Li, W, and O on a surface of the primary particle. The compound B usually has high ion conductivity, and thus the reduction in resistance may be achieved when the compound B is present on the surface of the primary particle. Also, since the compound B is present on the surface of the primary particle, resistance increase over time can be suppressed. The compound B may be directly arranged, or may be arranged interposing another layer (another compound), on the surface of the primary particle, but the former is preferable.

The compound B contains at least Li, W, and O. The compound B may be configured by only Li, W, and O, and may further contain additional element. One example of the composition of the compound B may be $Li_aW_bO_c$, wherein $5.5 \le a \le 6.5$, $0.5 \le b \le 1.5$, and $5.5 \le c \le 6.5$. The compound B having the composition above is typically $Li_6WO_6$. Another example of the composition of the compound B may be $Li_aW_bO_c$, wherein $1.5 \le a \le 2.5$, $0.5 \le b \le 1.5$, and $3.5 \le c \le 4.5$. The compound B having the composition above is typically $Li_2WO_4$. Also, another example of the composition of the compound B may be $Li_aW_bO_c$, wherein $3.5 \le a \le 4.5$, $0.5 \le b \le 1.5$, and $4.5 \le c \le 5.5$. The compound B having the composition above is typically $Li_4WO_5$. Further, another example of the composition of the compound B may be $Li_aW_bO_c$, wherein $1.5 \le a \le 2.5$, $1.5 \le b \le 2.5$, and $6.5 \le c \le 7.5$. The compound B having the composition above is typically $Li_2W_2O_7$.

The compound B may be crystalline, and may be amorphous. Also, the compound B is preferably in a film shape. "The compound B is in a film shape" means that, in a cross-section image of the primary particle, when $L_3$ designates a length of the compound B in a normal direction of the surface of the primary particle, and $L_4$ designates a length of the compound B in a direction perpendicular to the normal direction, a ratio $L_4/L_3$, which is a ratio of $L_4$ to $L_3$ is more than 3.0. The cross-section image of the primary particle is, for example, a cross-section image of a transmission microscope (TEM). The thickness (length $L_3$) of the compound B is not particularly limited, and for example, it is 0.5 nm or more and 20 nm or less, and may be 1 nm or more and 15 nm or less. The thickness of the compound B is obtained as an average value of at least 5 points measured by the TEM observation.

The ratio of W included in the compound B when all the transition metals included in the primary particle is 1 part by mol is, for example, 0.001 parts by mol or more, may be 0.003 parts by mol or more, and may be 0.005 parts by mol or more. Meanwhile, the ratio of W included in the compound B is, for example, 0.100 parts by mol or less, may be 0.080 parts by mol or less, and may be 0.060 parts by mol or less.

The coverage of the compound C to the primary particle is not particularly limited, but for example, it is 10% or more and 90% or less, may be 20% or more and 80% or less, and may be 30% or more and 70% or less. Also, the ion conductivity of the compound B is usually higher than the ion conductivity of $W_2O_3$. Ion conductivity of the compound B at 25°C is, for example, $1.0 * 10^{-5}$ S/cm or more, and may be $1.0* 10^{-4}$ S/cm or more. Also, the compound B (compound containing Li, W, and O) is arranged on a surface of the primary particle. The primary particle may or may not contain W.

4. Aggregate

The cathode active material in the present disclosure is an aggregate configured by a plurality of the primary particles. As shown in FIG. 1, the cathode active material 10 is configured by a plurality of the primary particles 1.

The average particle size of the primary particles in the aggregate is, for example, 0.5 μm or more, may be 0.6 μm or more, may be 0.8 μm or more, may be 1.0 μm or more, may be 2 μm or more, and may be 5 μm or more. Meanwhile, the average particle size of the primary particles in the aggregate is, for example, 20 μm or less, may be 15 μm or less, and may be 10 μm or less. The particle size of each of the primary particles in the aggregate is obtained as, for example, the maximum length of the diameter in the SEM observation. Also, for example, when the aggregate (cathode active material) is included in the cathode active material layer, the particle size (maximum length of the diameter) of each of the primary particles in the aggregate may be obtained from the cross-sectional image of the cathode active material layer.

The number of the primary particles configuring the aggregate is, usually 2 or more, may be 5 or more, and may be 10 or more. Meanwhile, the number of the primary particles configuring the aggregate is, for example, 100 or less. Also, the average particle size of the aggregate is, for example, larger than 0.5 μm and 30 μm or less, may be 0.8 μm or more and 25 μm or less, may be 1 μm or more and 20 μm or less, and may be 2 μm or more and 15 μm or less. Also, the shape of the aggregate is, for example, a granular shape.

When a pore diameter distribution measurement by a mercury press-in method is performed to the cathode active material in the present disclosure, a peak is preferably present in a range of 65 nm or more and 300 nm or less. The peak includes an inflection point. The peak may be present in a range of 60 nm or more and 180 nm or less, and may be present in a range of 80 nm or more and 160 nm or less. The peak may be present in a range of 80 nm or more and 220 nm or less, and may be present in a range of 100 nm or more and 200 nm or less.

The pore amount in the peak is, for example, 0.010 mL/g or more, may be 0.015 mL/g or more, may be 0.020 mL/g

or more, may be 0.025 mL/g or more, and may be 0.045 mL/g or more. Meanwhile, the pore amount in the peak is, for example, 0.100 mL/g or less, may be 0.090 mL/g or less, may be 0.080 mL/g or less, and may be 0.060 mL/g or less.

In the present disclosure, at least one of the compound A and the compound B may be present in an interface between adjacent primary particles in the aggregate.

5. Cathode active material

The cathode active material in the present disclosure includes a crystalline primary particle containing Li, TM, which is a transition metal, and O. Also, the cathode active material is an aggregate configured by a plurality of the primary particle. The cathode active material is usually used for a battery. Also, there are no particular limitations on the method for producing the cathode active material, and examples thereof may include the method described in "D. Method for producing cathode active material" later.

The present disclosure can also provide a cathode active material powder including: a plurality of crystalline primary particle containing Li, TM, which is a transition metal, and O, as a cathode active material, wherein at least a part of the plurality of primary particle configures an aggregate; and there are a compound A containing La, Ni, and O, and a compound B containing Li, W, and O, on a surface of the primary particle configuring the aggregate. A part of the plurality of primary particle may configure a single crystalline active material. Also, the rate of the aggregate to all the cathode active materials in the cathode active material powder is, for example, 5 mass% or more, may be 10 mass% or more, may be 20 mass% or more, may be 30 mass% or more, may be 40 mass% or more, may be 50 mass% or more, may be 60 mass% or more, and may be 70 mass% or more.

B. Cathode mixture

The cathode mixture in the present disclosure contains the above described cathode active material.

According to the present disclosure, the above described cathode active material is used, and thus a cathode mixture capable of reducing the resistance and reducing the increase rate of cycle resistance may be achieved. The cathode mixture may contain other materials (such as a conductive material and a binder) in addition to the cathode active material. Also, the cathode mixture may contain the above described cathode active material powder. Also, the cathode mixture may be in a powder shape, and may be in a slurry shape containing a dispersion medium.

The rate of the cathode active material in a solid content of the cathode mixture is, for example, 20 mass% or more, may be 30 mass% or more and may be 40 mass% or more. If the rate of the cathode active material is too little, there is a possibility that sufficient energy density may not be obtained. Meanwhile, the rate of the cathode active material in the solid content of the cathode mixture is, for example, 95 mass% or less, may be 70 mass% or less and may be 60 mass% or less. If the rate of the cathode active material is too much, there is a possibility that the ion conductivity and the electron conductivity may be relatively degraded.

The cathode mixture may contain a conductive material. By adding the conductive material, electron conductivity improves. Examples of the conductive material may include a carbon-based material, a metal particle, and a conductive polymer. Examples of the carbon-based conductive material may include a particulate carbon material such as acetylene black (AB) and Ketjen black (KB), and a fiber carbon material such as vapor grown carbon fiber (VGCF), carbon nanotube (CNT), and carbon nanofiber (CNF).

The rate of the conductive material in the solid content of the cathode mixture is, for example, 0.1 mass% or more. If the rate of the conductive material is too little, there is a possibility that the electron conduction path may be insufficient. Meanwhile, the rate of the conductive material in the solid content of the cathode mixture is, for example, 5 mass% or less. If the rate of the conductive material is too much, the rate of the cathode active material would be relatively little, and there is a possibility the energy density may decrease.

The cathode mixture may contain a binder. By adding the binder, the cathode active material layer in which the cathode active material does not easily fall off can be obtained. Examples of the binder may include a rubber-based binder such as styrene butadiene rubber (SBR), and butadiene rubber (BR); a polycarbonate-based binder such as carboxymethylcellulose; and a fluoride-based binder such as polyvinylidene fluoride (PVdF).

The rate of the binder in the solid content of the cathode mixture is, for example, 0.5 mass% or more. If the rate of the binder is too little, there is a possibility that the falling off of the cathode active material may not be sufficiently inhibited. Meanwhile, the rate of the binder in the solid content of the cathode mixture is, for example, 15 mass% or less. If the rate of the binder is too much, the rate of the cathode active material would be relatively little, and there is a possibility the energy density may decrease.

C. Battery

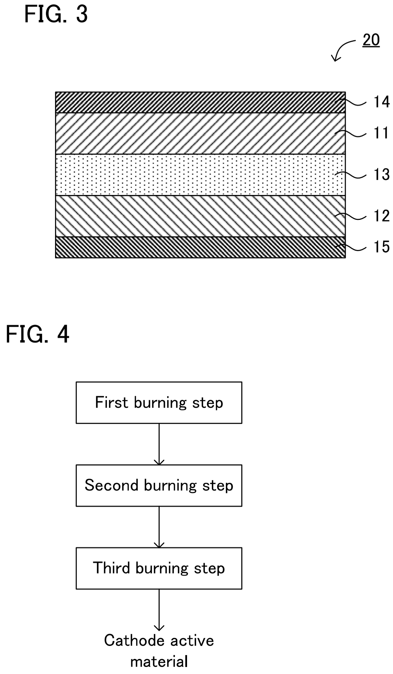

FIG. 3 is a schematic cross-sectional view exemplifying the battery in the present disclosure. Battery 20 shown in

FIG. 2 includes cathode active material layer 11, anode active material layer 12, electrolyte layer 13 arranged between the cathode active material layer 11 and the anode active material layer 12, cathode current collector 14 for collecting currents of the cathode active material layer 11, and anode current collector 15 for collecting currents of the anode active material layer 12. In the present disclosure, the cathode active material layer 11 contains the cathode mixture described in "B. Cathode mixture" above.

According to the present disclosure, by using the above described cathode mixture, a battery capable of reducing the resistance and reducing the increase rate of cycle resistance may be achieved.

1. Cathode active material layer

The cathode active material layer contains at least a cathode active material. Also, the cathode active material layer may contain a conductive material and a binder. The cathode active material, the conductive material, and the binder are in the same contents as those described in "A. Cathode active material" above and "B. Cathode mixture" above.

The cathode active material layer may contain an electrolyte. The electrolyte is, for example, the later described liquid electrolyte. Meanwhile, the cathode active material layer may contain a solid electrolyte. The thickness of the cathode active material layer is, for example, 0.1 μm or more and 1000 μm or less, may be 1 μm or more and 500 μm or less, and may be 30 μm or more and 100 μm or less.

There are no particular limitations on the method for producing the cathode active material layer, and examples thereof may include a method in which a cathode slurry containing a cathode active material and a dispersion medium is applied on the cathode current collector and dried. Pressing treatment may be performed to the cathode active material layer after drying. By the pressing treatment, density of the cathode active material layer improves.

2. Anode active material layer

The anode active material layer contains at least an anode active material. Examples of the anode active material may include a carbon-based active material, a Li-based active material, a Si-based active material, and an oxide-based active material.

Examples of the carbon-based active material may include graphite, soft carbon, and hard carbon. The graphite may be a natural graphite, and may be an artificial graphite. Examples of the Li-based active material may include Li and a Li alloy. Examples of the Li alloy may include a Li-Si alloy. Examples of the Si-based active material may include Si, a SiC composite active material, a Si alloy and a Si oxide. Examples of the SiC composite active material may include an active material in which a carbon carrier is supported by Si or a Si alloy. examples of the oxide-based active material may include a lithium titanate such as $Li_4Ti_5O_{12}$.

The rate of the anode active material in the anode active material layer is, for example, 20 mass% or more, may be 30 mass% or more and may be 40 mass% or more. If the rate of the anode active material is too little, there is a possibility that sufficient energy density may not be obtained. Meanwhile, the rate of the anode active material in the anode active material layer is, for example, 95 mass% or less, may be 70 mass% or less and may be 60 mass% or less. If the rate of the anode active material is too much, there is a possibility that the ion conductivity and the electron conductivity in the anode active material layer may be relatively degraded.

The anode active material layer may contain at least one of a conductive material, a binder, and an electrolyte. The details of the conductive material, the binder, and the electrolyte are in the same contents as those described in "1. Cathode active material layer" above. Also, the thickness of the anode active material layer is, for example, 0.1 μm or more and 1000 μm or less, may be 1 μm or more and 500 μm or less, and may be 30 μm or more and 100 μm or less. method for producing the anode active material layer, and examples thereof may include a method in which an anode slurry containing an anode active material and a dispersion medium is applied on the anode current collector and dried. Pressing treatment may be performed to the anode active material layer after drying. By the pressing treatment, density of the anode active material layer improves.

3. Electrolyte layer

The electrolyte layer is a layer arranged between the cathode active material layer and the anode active material layer, and contains at least an electrolyte. The electrolyte is, for example, an electrolyte solution (liquid electrolyte).

Examples of the electrolyte may include a non-aqueous liquid electrolyte. The non-aqueous liquid electrolyte contains, for example, a lithium salt and a non-aqueous solvent. Examples of the lithium salt may include an inorganic lithium salt such as $LiPF_6$, $LiBF_4$, $LiClO_4$ and $LiAsF_6$; and an organic lithium salt such as $LiCF_3SO_3$, $LiN(SO_2CF_3)_2$, $LiN(SO_2C_2F_5)_2$, and $LiC(SO_2CF_3)_3$.

Examples of the non-aqueous solvent may include a carbonate-based solvent such as ethylene carbonate (EC), propylene carbonate (PC), butylene carbonate (BC), dimethyl carbonate (DMC), diethyl carbonate (DEC), and ethyl

methyl carbonate (EMC). The non-aqueous solvent may be a mixture of cyclic carbonate having high dielectric constant and high viscosity such as EC and PC with chain carbonate having low dielectric constant and low viscosity such as DMC, DEC, and EMC. The concentration of the lithium salt in the non-aqueous liquid electrolyte is, for example, 0.3 M or more and 5 M or less. Also, the non-aqueous liquid electrolyte may include an ionic solution. Examples of the ionic solution may include sulfonium salt, ammonium salt, pyridinium salt, piperidinium salt, pyrrolidinium salt, morpholinium salt, phosphonium salt, and imidazolium salt.

Examples of other electrolytes may include a water-based liquid electrolyte. The water-based liquid electrolyte is an electrolyte including water as a main component of the solvent. The proportion of water to all the solvent is, for example, 50 mass% or more, and may be 70 mass% or more. Examples of the lithium salt used in the water-based liquid electrolyte may include an imide-based electrolyte such as lithiumbis(fluorosulfonil)imide, and lithiumbis(trifluoromethanesulfonil) imide. The concentration of the lithium salt in water-based liquid electrolyte is, for example, 1 M or more and 25 M or less.

The electrolyte layer may include a separator impregnated with the above described liquid electrolyte. By arranging the separator, occurrence of short circuit can be inhibited. The separator is, for example, a porous film. Examples of the materials of the separator may include a resin such as polyethylene, polypropylene, polyester, polyvinyl alcohol, cellulose, and polyamide. Also, the electrolyte layer may contain a solid electrolyte. Examples of the solid electrolyte may include an organic solid electrolyte such as a polymer electrolyte and a gel electrolyte; and an inorganic solid electrolyte such as a sulfide solid electrolyte, an oxide solid electrolyte, and a halide solid electrolyte.

4. Battery

The battery in the present disclosure preferably includes a cathode current collector for collecting currents of the cathode active material layer, and an anode current collector for collecting currents of the anode active material layer. Examples of the material for the cathode current collector may include SUS, aluminum, nickel, iron, titanium, and carbon. Meanwhile, examples of the material for the anode current collector may include SUS, copper, nickel, and carbon. Also, the battery in the present disclosure may include an outer package for storing a power generation elements (the cathode active material layer, the electrolyte layer, and the anode active material layer). Examples of the outer package may include a case type outer package and a laminate type outer package.

The kind of the battery in the present disclosure is not particularly limited, but is typically a lithium ion battery. Also, the battery in the present disclosure may be a primary battery and may be a secondary battery, but preferably a secondary battery among them. The reason therefor is to be repeatedly charged and discharged and useful as a car-mounted battery for example. Examples of the applications of the battery may include a power source for vehicles such as hybrid electric vehicles (HEV), plug-in hybrid electric vehicles (PHEV), battery electric vehicles (BEV), gasoline-fueled automobiles and diesel powered automobiles. In particular, it is preferably used as a power source for driving hybrid electric vehicles (HEV), plug-in hybrid electric vehicles (PHEV), and battery electric vehicles (BEV). Also, the battery may be used as a power source for moving bodies other than vehicles (such as rail road transportation, vessel and airplane), and may be used as a power source for electronic products such as information processing equipment.

D. Method for producing cathode active material

FIG. 4 is a flow chart exemplifying the method for producing the cathode active material in the present disclosure. In FIG. 4, first, a first mixture that includes: a transition metal hydroxide containing the TM; a Li source; and a W source, is burned at a temperature $T_1$ to obtain a first burned body (first burning step). Next, the first burned body is burned at a temperature $T_2$ to obtain a second burned body (second burning step). Next, a second mixture, which is produced by adding a La source to a crushed product of the second burned body, is burned at a temperature $T_3$ to obtain a third burned body (third burning step). Thereby, a cathode active material is obtained. In the present disclosure, at least one of the first mixture and the second mixture contains a Ni source. Also, the temperature $T_2$ in the second burning step is higher than the temperature $T_1$ in the first burning step, and the temperature $T_3$ in the third burning step is lower than the temperature $T_2$ in the second burning step. Further, the temperature $T_1$, the temperature $T_2$, and the temperature $T_3$ are respectively in the specified range.

According to the present disclosure, by performing the first burning step, the second burning step and the third burning step, a cathode active material capable of reducing the resistance and reducing the increase rate of cycle resistance can be obtained.

1. First burning step

The first burning step is a step of burning a first mixture that includes: a transition metal hydroxide containing the TM; a Li source; and a W source, at a temperature $T_1$ to obtain a first burned body,
The transition metal hydroxide contains a TM, which is a transition metal. The transition metal hydroxide corresponds to a

precursor of the cathode active material. The transition metal hydroxide typically does not contain Li, but may contain Li. Also, the transition metal hydroxide may or may not contain La. Also, the transition metal hydroxide may or may not contain W. Also, the transition metal hydroxide may or may not contain Ni.

There are no particular limitations on the method for synthesizing the transition metal hydroxide, and examples thereof may include a following method. First, a raw material aqueous solution of the transition metal hydroxide is prepared. Examples of the method for preparing the raw material aqueous solution may include a method in which the water soluble transition metal compound is dissolved in water. Examples of the transition metal compound may include a metal salt such as a sulfate and a nitrate. Examples of the Ni source may include $NiSo_4$, and $Ni(NO_3)_2$. Examples of the Co source may include $CoSO_4$, $Co(NO_3)_2$, and $Co(NO_3)_3$. Examples of the Mn source may include $MnSO_4$, and $Mn(NO_3)_2$. The composition of the raw material aqueous solution is appropriately adjusted in accordance with the intended cathode active material.

Next, a sodium hydroxide aqueous solution is added to a reaction container, and the raw material aqueous solution and NH3 aqueous solution are dropped thereto while maintaining the pH alkaline (such as pH 11.3 to 12.0). The reaction temperature is not particularly limited, but for example, it is 50°C or more and 65°C or less. After the reaction completed, it is preferable to take out the transition metal hydroxide by filtrating, and to dry it after washing with water.

In the first burning step, a first mixture including a transition metal hydroxide, a Li source, and a W source, is prepared. Examples of the Li source may include lithium hydroxide, lithium carbonate, lithium nitrate, lithium acetate, lithium oxide, and lithium chloride. The Li source may be lithium hydroxide, and may be a Li-containing compound other than the lithium hydroxide. The molar ratio of Li in the Li source to the TM included in the transition metal hydroxide is, for example, 0.8 or more and 1.2 or less, may be 0.9 or more and 1.1 or less, and may be 1.0.

Examples of the W source may include $H_2WO_4$. Also, the first mixture may or may not contain Ni. For example, when the transition metal hydroxide includes Ni, the transition metal hydroxide may also work as the Ni source. Meanwhile, when the transition metal hydroxide does not include Ni, it is necessary to use the Ni source separately. Examples of the Ni source may include $Ni(OH)_2$, $NiSO_4$, and $Ni(NO_3)_2$. The addition amounts of the La source, the W source, and the Ni source are appropriately adjusted in accordance with the intended cathode active material.

The mixture preferably contains a molten salt. When the molten salt works as a flux, the primary particle can sufficiently grow. The molten salt may contain Li. Examples of the molten salt may include lithium hydroxide. The molar ratio (Li/TM) of Li included in the molten salt to the TM included in the transition metal hydroxide is usually 0.1 or more and less than 0.6. The Li/TM may be 0.15 or more, may be 0.2 or more, and may be 0.25 or more. Meanwhile, the Li/TM may be 0.55 or less, and may be 0.5 or less.

The mixture may contain a lithium hydroxide as the Li source and the molten salt. The molar ratio (Li'/TM) of Li included in the Li source and the molten salt to the TM included in the transition metal hydroxide is, for example, 1.1 or more, may be 1.15 or more, and may be 1.2 or more. Meanwhile, the Li'/TM is, for example, less than 1.6, may be 1.55 or less, and may be 1.5 or less.

In the first burning step, the first mixture is burned at the temperature $T_1$ to obtain a first burned body. The temperature $T_1$ is usually 500°C or more and 800°C or less, and may be 550°C or more and 750°C or less. When the temperature $T_1$ is too high, not the compound B containing Li, W, and O, but $W_2O_3$ is easily generated, and it is difficult to achieve the reduction in resistance.

Meanwhile, when the temperature $T_1$ is too low, it is difficult to sufficiently grow the primary particle.

The burning time in the first burning step is not particularly limited, and for example, it is 5 hours or more and 15 hours or less, and may be 8 hours or more and 12 hours or less. The atmosphere in the first burning step is usually an atmosphere wherein oxygen is present. Examples of the burning method in the first burning step may include a method using a burning furnace such as a muffle furnace and an electric furnace.

In the first burning step, a crushing treatment of crushing the first burned body may be performed. Examples of the method for crushing in the crushing treatment may include hammer milling, lab milling, and ball milling.

2. Second burning step

The second burning step is a step of burning the first burned body at a temperature $T_2$ to obtain a second burned body. The temperature $T_2$ in the second burning step is usually higher than the temperature $T_1$ in the first burning step. When the temperature $T_2$ is higher than the temperature $T_1$, an aggregate having a peak at the specified position in the pore diameter distribution can be easily obtained.

The difference between the temperature $T_2$ and the temperature $T_1$ is, for example, 50°C or more, may be 75°C or more, and may be 100°C or more. Also, the temperature $T_2$ is usually 600°C or more and 1000°C or less, and may be 650°C or more and 950°C or less. When the temperature $T_2$ is too high, there is a possibility that $W_2O_3$ may be easily generated. Meanwhile, when the temperature $T_2$ is too low, there is a possibility that an aggregate having a peak at the specified position in the pore diameter distribution may not be obtained. The burning time in the second burning step is not particularly limited, and for example, it is 1 hours or more and 5 hours or less, and may be 2 hours or more and 4 hours or

less. The burning time in the second burning step may be shorter than the burning time in the first burning step. The atmosphere in the second burning step is usually an atmosphere wherein oxygen is present. Examples of the burning method in the second burning step may include a method using a burning furnace such as a muffle furnace and an electric furnace.

In the second burning step, usually, a crushing treatment of crushing the second burned body is performed. Examples of the method for crushing in the crushing treatment may include hammer milling, lab milling, and ball milling. It is preferable to adjust the crushing conditions so as to obtain an aggregate having a peak at the specified position in the pore diameter distribution.

3. Third burning step

The third burning step is a step of burning a second mixture, which is produced by adding a La source to a crushed product of the second burned body, at a temperature $T_3$ to obtain a third burned body. The temperature $T_3$ in the third burning step is usually lower than the temperature $T_2$ in the second burning step. When the temperature $T_2$ is lower than the temperature $T_3$, not $La_2O_3$ but the compound A containing La, Ni, and O is easily generated, and the reduction of resistance can be achieved.

Examples of the La source may include a hydroxide; and a metal salt such as a sulfate and a nitrate. Examples of the La source may include $La(OH)_3$, $LaSO_4$, and $La(NO_3)_3$. The adding amount of the La source is appropriately adjusted in accordance with the intended cathode active material. Also, the second mixture may or may not contain Ni.

The difference between the temperature $T_2$ and the temperature $T_3$ is, for example, 100°C or more, may be 150°C or more, and may be 200°C or more. Also, the temperature $T_3$ is usually 400°C or more and 600°C or less, and may be 450°C or more and 550°C or less. When the temperature $T_2$ is too high, there is a possibility that $La_2O_3$ is easily generated. Meanwhile, when the temperature $T_2$ is too low, there is a possibility that the effect of improving the electron conductivity by the compound A may not be sufficiently obtained.

The temperature $T_3$ in the third burning step may be lower than the temperature $T_1$ in the first burning step. The difference between the temperature $T_1$ and the temperature $T_3$ is, for example, 50°C or more, may be 75°C or more, and may be 100°C or more.

The burning time in the third burning step is not particularly limited, and for example, it is 3 hours or more and 7 hours or less, and may be 4 hours or more and 6 hours or less. The burning time in the third burning step may be longer than the burning time in the second burning step. The atmosphere in the third burning step is usually an atmosphere wherein oxygen is present. Examples of the burning method in the third burning step may include a method using a burning furnace such as a muffle furnace and an electric furnace.

In the third burning step, a crushing treatment of crushing the third burned body may be performed. Examples of the method for crushing in the crushing treatment may include hammer milling, lab milling, and ball milling. It is preferable to adjust the crushing conditions so as to obtain an aggregate having a peak at the specified position in the pore diameter distribution.

4. Other steps

The method for producing the cathode active material in the present disclosure may or may not include a granulating step of granulating the crushed product of the third burned body after the third burning step. By granulating, a large aggregate can be obtained, and thereby the pore diameter distribution can be controlled. Examples of the method for granulating the crushed product of the burned substance may include a spray-dry method. In the spray-dry method, for example, the crushed product of the burned substance is dispersed in water, and the dispersed liquid is sprayed using a spray-dry device. The heating temperature of the spray-dry device is, for example, 150°C or more and 250°C or less.

5. Cathode active material

The cathode active material obtained by the above described each steps is in the same contents as those described in "A. Cathode active material" above.

Incidentally, the present disclosure is not limited to the embodiments. The embodiments are exemplification, and any other variations are intended to be included in the technical scope of the present disclosure if they have substantially the same constitution as the technical idea described in the claims of the present disclosure and have similar operation and effect thereto.

Examples

[Comparative Example 1]

<Production of cathode active material>

As raw materials, $NiSO_4$, $CoSO_4$, and $MnSO_4$ were prepared, and these were dissolved in an ion exchanged water to prepare a raw material aqueous solution. The ratio of Ni, Co, and Mn in the raw material aqueous solution was Ni : Co : Mn = 8 : 1 : 1 in the molar ratio. Also, the concentration of the raw material aqueous solution (ratio of all the raw materials to the raw material aqueous solution) was 30 mass%.

After that, fixed amount of $NH_3$ aqueous solution was put in a reaction container, and inside the reaction container was substituted with nitrogen by stirring with a stirrer. NaOH aqueous solution was added to the reaction container, and the raw material aqueous solution and $NH_3$ aqueous solution were dropped thereto while maintaining the pH alkaline (pH = 12) and controlling the temperature constant, and thereby a transition metal hydroxide was deposited. The reaction temperature was 60°C, and the reaction time was 10 hours. Next, the deposited transition metal hydroxide was taken out by filtration, and washed by adding an ion exchanged water and dispersing with a spoon. The transition metal hydroxide after washed by the water was dried in the conditions of 120°C and 16 hours, and thereby a transition metal hydroxide that was a precursor was obtained.

After that, a Li source (LiOH) was added to the obtained precursor, mixed with an agate mortar, and thereby a first mixture was obtained. The adding amount of the Li source was adjusted so that a molar ratio (Li/NMC) of Li included in the Li source to the+ total (NCM) of Ni, Co, and Mn included in the precursor became 1.1. The obtained first mixture was burned in a burning furnace in the conditions of 900°C, an oxygen atmosphere, and 10 hours, to obtain a burned body. The obtained burned body was crushed using jet milling, the particle size was adjusted, and thereby a cathode active material was obtained.

<Production of battery>

A battery was produced using the obtained cathode active material. In specific, a cathode mixture paste including a cathode active material, a conductive material (acetylene black), and a binder (polyvinylidene fluoride) in a mass ratio of the cathode active material : the conductive material : the binder = 88 : 10 : 2, was applied on a surface of a metal foil that was a cathode current collector using a film applicator with film thickness adjusting function (from Allgood Corporation). After that, the product was dried by a dryer at 80°C for 5 minutes, and a cathode including the cathode current collector and the cathode active material layer was obtained.

Next, an anode mixture paste including an anode active material (natural graphite) and a binder (SBR and CMC) was applied on a surface of a metal foil that was an anode current collector using a film applicator with film thickness adjusting function (from Allgood Corporation). After that, the product was dried by a dryer at 80°C for 5 minutes, and thereby an anode including the anode current collector and the anode active material layer was obtained. Next, as a liquid electrolyte, $LiPF_6$ solution having the concentration of 1 M was prepared. As the solvent of the liquid electrolyte, a mixture solvent in which ethylene carbonate (EC), dimethyl carbonate (DMC), and ethyl methyl carbonate (EMC) were mixed in a volume ratio of EC : DMC : EMC = 3 : 4 : 3 was used. By using the cathode, the anode, and the liquid electrolyte, a winding cylindrical shaped battery was obtained.

[Comparative Example 2]

A precursor (transition metal hydroxide) was obtained in the same manner as in Comparative Example 1. A Li source (LiOH), a La source ($La(OH)_3$), and a W source ($H_2WO_4$) were added to the obtained precursor, mixed with an agate mortar, and thereby a first mixture was obtained. The adding amount of the Li source was adjusted so that a molar ratio (Li/NMC) of Li included in the Li source to the total (NCM) of Ni, Co, and Mn included in the precursor became 1.1. Also, the adding amount of the La source was adjusted so that La/NCM became 0.005, and further, the adding amount of the W source was adjusted so that W/NCM became 0.005. A cathode active material and a battery were obtained in the same manner as in Comparative Example 1 except that the obtained first mixture was used.

[Comparative Example 3]

A first mixture was obtained in the same manner as in Comparative Example 2. The obtained first mixture was burned in a burning furnace in the conditions of 650°C, an oxygen atmosphere, and 10 hours, to obtain a first burned body. The obtained first burned body was crushed using jet milling, and then burned in a burning furnace in the conditions of 500°C, an oxygen atmosphere, and 3 hours, and thereby a second burned body was obtained.

[Example 1]

A precursor (transition metal hydroxide) was obtained in the same manner as in Comparative Example 1. A Li

source (LiOH) and a W source ($H_2WO_4$) were added to the obtained precursor, mixed with an agate mortar, and thereby a first mixture was obtained. The adding amount of the Li source was adjusted so that a molar ratio (Li/NMC) of Li included in the Li source to the total (NCM) of Ni, Co, and Mn included in the precursor became 1.2. Also, the adding amount of the W source was adjusted so that W/NCM became 0.005. The obtained first mixture was burned in a burning furnace in the conditions of 650°C, an oxygen atmosphere, and 10 hours, to obtain a first burned body.

The obtained first burned body was crushed using jet milling, and then burned in a burning furnace in the conditions of 800°C, an oxygen atmosphere, and 3 hours, and thereby a second burned body was obtained. The obtained second burned body was crushed using jet milling. A La source ($La(OH)_3$) was added to the obtained crushed product, mixed with an agate mortar, and thereby a second mixture was obtained. The adding amount of the La source was adjusted so that a molar ratio (La/NMC) of La included in the La source to the total (NCM) of Ni, Co, and Mn included in the crushed product became 0.005. After that, burning was performed in a burning furnace in the conditions of 500°C, an oxygen atmosphere, and 5 hours, to obtain a third burned body. The obtained third burned body was crushed using jet milling, the particle size was adjusted, and thereby a cathode active material was obtained. A battery was obtained in the same manner as in Comparative Example 1 except that the obtained cathode active material was used.

[Example 2]

A third burned body was obtained in the same manner as in Example 1. The obtained burned substance was crushed by hammer milling, and cracked to the specified particle size (crushing). After that, 30 g of the crushed product was dispersed in pure water of 100 mL, and sprayed at 200°C by a spray-dry device from BUCHI to obtain a cathode active material that was a granulated body. A battery was obtained in the same manner as in Example 1 except that the obtained cathode active material was used. Incidentally, in Table 1, synthesizing method 1 is a method in which one step of burning was performed as in Comparative Examples 1 and 2, synthesizing method 2 is a method in which two steps of burning were performed as in Comparative Example 3, and synthesizing method 3 is a method in which three steps of burning were performed as in Examples 1 and 2.

[Evaluation]

<SEM-EDX measurement>

To the cathode active materials obtained in Examples 1, 2 and Comparative Examples 1 to 3, cross-section observation and element analysis were performed by a scanning electron microscope - energy dispersive X-ray spectroscopy (SEM-EDX). As a result, it was confirmed that the primary particles in Examples 1, 2, and Comparative Examples 1 to 3 had Ni, Co, and Mn. Also, in Examples 1, 2 and Comparative Example 3, a compound in a particle shape was confirmed on the surface of the primary particles, and it was confirmed that the compound in the particle shape had La, Ni, and O from the mapping image.

<TEM-EDX measurement>

To the cathode active materials obtained in Examples 1, 2 and Comparative Example 3, cross-section observation and element analysis were performed by a transmission electron microscope - energy dispersive X-ray spectroscopy (TEM-EDX). As a result, a compound in a film shape was confirmed on the surface of the primary particles in Examples 1, 2 and Comparative Example 3, and it was confirmed that the compound in the film shape had W and O from the mapping image.

<XRD measurement>

An X-ray diffraction (XRD) measurement using CuK$\alpha$ ray was respectively conducted to the cathode active materials obtained in Examples 1, 2 and Comparative Examples 1 to 3. As a result, it was confirmed that all the cathode active materials obtained in Examples 1, 2 and Comparative Examples 1 to 3 had the layered rock salt type crystal phase belonging to the space group R-3m. In other words, it was confirmed that the primary particle containing Ni, Co, and Mn included the layered rock salt type crystal phase.

Also, in the cathode active materials obtained in Examples 1, 2 and Comparative Example 3, a peak derived from the crystal phase of LaNiO series ($La_4LiNiO_8$) was confirmed. For this reason, it was confirmed that the compound A present on the surface of the primary particle was crystalline. Meanwhile, in the cathode active materials obtained in Examples 1, 2 and Comparative Example 3, a peak derived from the crystal phase of LiWO series was not confirmed. For this reason, it is presumed that the compound B present on the surface of the primary particle was amorphous.

Meanwhile, in the cathode active material obtained in Comparative Example 2, a peak derived from the crystal

phase of LaNiO series was not confirmed, but the peaks derived from $La_2O_3$ and $W_2O_3$ were confirmed. In other words, in the cathode active material obtained in Comparative Example 2, the compound A and the compound B in the present disclosure were not formed.

<Pore diameter distribution measurement>

The pore diameter distribution measurement by a mercury press-in method was performed to the cathode active materials obtained in Examples 1, 2 and Comparative Examples 1 to 3. In specific, the pore diameter distribution of the cathode active material was respectively measured by injecting mercury to a sample tube in which 1 g of the cathode active material was sealed, using a mercury press-in type pore distribution measurement device from Micromeritics. In Examples 1 and 2, since the cathode active material that was an aggregate was obtained, there was a peak in a range of 65 nm or more and 300 nm or less. Meanwhile, in Comparative Examples 1 to 3, since the single crystalline cathode active material was obtained, the above described peak was not present. The results of the peak positions are shown in Table 1.

<Initial resistance>

The initial resistance of the batteries obtained in Examples 1, 2 and Comparative Examples 1 to 3 was respectively measured. In specific, the batteries were charged until 4.3 V, and then discharged until 3.7 V. After that, the voltage drop (V) when discharged for 10 seconds under the conditions of 0°C and each C rate of 0.1 C, 0.3 C, 0.5 C, 0.7 C, and 1.0 C was respectively measured. The relation of the voltage drop (V) with respect to the current value was plotted, and the inclination when a close to straight line was drawn by a linear function was defined as a resistance (IV resistance). The results are shown in Table 1. Incidentally, the value of initial resistance in Table 1 is the relative value when the initial resistance of Comparative Example 1 is regarded as 100%.

<Increase rate of cycle resistance>

The increase in cycle resistance was measured using the batteries obtained in Reference Examples 1, 2 and Comparative Examples 1 to 3. In specific, the resistance (IV resistance) before and after the cycle test was measured. The cycle test was performed in the conditions of, the voltage range: 3.0 V to 4.3 V, C rate: 0.3 C, mode: CC charge and discharge, and temperature: 50°C for 100 cycles, and the increase in cycle resistance was obtained based on the below equation.

Increase in cycle resistance (%) = (Resistance after cycle test) / Initial resistance * 100

The results are shown in Table 1.

[Table 1]

| | Ratio | | | | | | Synthesizing method | Compound | | Peak position in 0nm-300nm | Initial resistance (%) | Increase rate of cycle resistance (%) |
|---|---|---|---|---|---|---|---|---|---|---|---|---|
| | Li | Ni | Co | Mn | La | W | | A | B | | | |
| Comp. Ex. 1 | 1.1 | 0.8 | 0.1 | 0.1 | - | - | 1 | - | - | - | 100 | 145 |
| Comp. Ex. 2 | 1.1 | 0.8 | 0.1 | 0.1 | 0.005 | 0.005 | 1 | - | - | - | 101 | 154 |
| Comp. Ex. 3 | 1.1 | 0.8 | 0.1 | 0.1 | 0.005 | 0.005 | 2 | ○ | ○ | - | 92 | 128 |
| Example 1 | 1.2 | 0.8 | 0.1 | 0.1 | 0.005 | 0.005 | 3 | ○ | ○ | 100 | 84 | 109 |
| Example 2 | 1.2 | 0.8 | 0.1 | 0.1 | 0.005 | 0.005 | 3 | ○ | ○ | 200 | 87 | 114 |

As shown in Table 1 in Examples 1, 2 and Comparative Example 3, it was confirmed that the initial resistance was lower compared to Comparative Examples 1 and 2. It is presumed that, since the compound A (compound A containing La, Ni and O) with excellent electron conductivity, and the compound B (compound B containing Li, W and O) with excellent ion conductivity were present on the surface of the primary particle, the movements of electrons and ions were smooth. Also, it was confirmed that the increase rate of cycle resistance in Examples 1 and 2 was respectively lower compared to Comparative Example 3. It is presumed that since the cathode active materials obtained in Examples 1 to 3 (aggregate) had smaller specific surface area compared to the cathode active material obtained in Comparative Example 3 (single crystal), accumulation of resistant component due to repeating charge and discharge was inhibited.

Reference Sings List

- 1 primary particle
- 10 cathode active material
- 11 cathode active material layer
- 12 anode active material layer
- 13 electrolyte layer
- 14 cathode current collector
- 15 anode current collector
- 20 battery

**Claims**

**1.** A cathode active material (10) **characterized by** comprising:

a plurality of crystalline primary particles (1) containing Li, TM, which is a transition metal, and O, wherein the cathode active material (10) is an aggregate configured by the plurality of crystalline primary particles (1); and there are a compound A containing La, Ni, and O, and a compound B containing Li, W, and O, on a surface of the primary particles (1).

**2.** The cathode active material (10) according to claim 1, **characterized in that** a peak is present in a range of 65 nm or more and 300 nm or less in a pore diameter distribution obtained by a mercury press-in method.

**3.** The cathode active material (10) according to claim 2, **characterized in that** the peak is present in a range of 80 nm or more and 220 nm or less in the pore diameter distribution.

**4.** The cathode active material (10) according to any one of claims 1 to 3, **characterized in that** a particle size of the primary particles (1) in the aggregate is 0.5 μm or more.

**5.** The cathode active material (10) according to any one of claims 1 to 4, **characterized in that** the primary particles (1) contains at least one kind of Ni, Co, and Mn as the TM.

**6.** The cathode active material (10) according to any one of claims 1 to 5, **characterized in that** the primary particles (1) include a layered rock salt type crystal structure.

**7.** The cathode active material (10) according to any one of claims 1 to 6, **characterized in that** at least one of the compound A and the compound B is present in an interface between adjacent primary particles (1) in the aggregate.

**8.** The cathode active material (10) according to any one of claims 1 to 7, **characterized in that** the compound A is in a particle shape.

**9.** The cathode active material (10) according to any one of claims 1 to 8, **characterized in that** the compound B is in a film shape.

**10.** A cathode mixture **characterized by** comprising the cathode active material according to any one of claims 1 to 9.

**11.** A battery (20) comprising a cathode active material layer (11) containing a cathode active material (10), an anode

active material layer (12) containing an anode active material, and an electrolyte layer (13) arranged between the cathode active material layer (11) and the anode active material layer (12), **characterized in that** the cathode active material layer (10) contains the cathode mixture according to claim 10.

12. A method for producing the cathode active material (10) according to any one of claims 1 to 9, the method **characterized by** comprising:

a first burning step of burning a first mixture that includes: a transition metal hydroxide containing the TM; a Li source; and a W source, at a temperature $T_1$ to obtain a first burned body,
a second burning step of burning the first burned body at a temperature $T_2$ to obtain a second burned body, and
a third burning step of burning a second mixture, which is produced by adding a La source to a crushed product of the second burned body, at a temperature $T_3$ to obtain a third burned body, wherein
at least one of the first mixture and the second mixture contains a Ni source,
the temperature $T_2$ in the second burning step is higher than the temperature $T_1$ in the first burning step,
the temperature $T_3$ in the third burning step is lower than the temperature $T_2$ in the second burning step,
the temperature $T_1$ is 500°C or more and 800°C or less,
the temperature $T_2$ is 600°C or more and 1000°C or less, and
the temperature $T_3$ is 400°C or more and 600°C or less.

FIG. 1

10
1

FIG. 2

A
1
B

FIG. 3

20
14
11
13
12
15

FIG. 4

First burning step
Second burning step
Third burning step
Cathode active material

Europäisches Patentamt
European Patent Office
Office européen des brevets

# EUROPEAN SEARCH REPORT

Application Number
EP 26 15 7984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 996 171 B1 (BASF SHANSHAN BATTERY MAT NINGXIANG CO LTD [CN]) 20 November 2024 (2024-11-20) | 1-11 | INV. C01G53/506 |
| A | * example 3 * ----- | 12 | ADD. H01M4/00 |
| A | EP 3 992 150 A1 (SUMITOMO METAL MINING CO [JP]) 4 May 2022 (2022-05-04) * the whole document * ----- | 1-12 | |
| A | KIRCHEV ANGEL ET AL: "Li-ion cell safety monitoring using mechanical parameters, Part II: battery behavior during thermal abuse tests", JOURNAL OF THE ELECTROCHEMICAL SOCIETY, vol. 170, 1 January 2023 (2023-01-01), XP093363577, Pennington, NJ ISSN: 0013-4651, DOI: 10.1149/1945-7111 * the whole document * ----- | 1-12 | |
| A | FAKHRUDIN MUHAMMAD ET AL: "La-incorporated NMC811 as a new Li-ion battery cathode material", AIP CONFERENCE PROCEEDINGS, vol. 2708, 1 January 2022 (2022-01-01), pages 070003-1, XP093423823, DOI: 10.1063/5.0123495 * the whole document * ----- -/-- | 1-12 | TECHNICAL FIELDS SEARCHED (IPC) C01G H01M |

The present search report has been drawn up for all claims

| Place of search | Date of completion of the search | Examiner |
|---|---|---|
| Munich | 6 August 2026 | Doslik, Natasa |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt
European
Patent Office
Office européen
des brevets

# EUROPEAN SEARCH REPORT

Application Number
EP 26 15 7984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DALKILIC ET.AL.: "W-Doping of Dense NMC811 Hydroxide through Wet Impregnation and Its Impact on Crystal Structure, Phase Transition Related Gas Evolution and Electrochemical Performance at Elevated Upper Cut-Off Voltage", JOURNAL OF THE ELECTROCHEMICAL SOCIETY, vol. 169, 1 December 2022 (2022-12-01), pages 1-13, XP093423832, DOI: https://iopscience.iop.org/article/10.1149/1945-7111/aca360/pdf * the whole document * ----- | 1-12 | |
| | | | TECHNICAL FIELDS SEARCHED (IPC) |

The present search report has been drawn up for all claims

2

| Place of search | Date of completion of the search | Examiner |
|---|---|---|
| Munich | 6 August 2026 | Doslik, Natasa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 26 15 7984

This annex lists the patent family members relating to the patent documents cited in the above-mentioned European search report. The members are as contained in the European Patent Office EDP file on
The European Patent Office is in no way liable for these particulars which are merely given for the purpose of information.

06-08-2026

| Patent document cited in search report | Publication date | Patent family member(s) | Publication date |
|---|---|---|---|
| EP 3996171 B1 | 20-11-2024 | CN 112186138 A | 05-01-2021 |
| | | EP 3996171 A1 | 11-05-2022 |
| | | JP 7318020 B2 | 31-07-2023 |
| | | JP 2022542774 A | 07-10-2022 |
| | | KR 20220019046 A | 15-02-2022 |
| | | US 2022416236 A1 | 29-12-2022 |
| | | WO 2021000868 A1 | 07-01-2021 |
| EP 3992150 A1 | 04-05-2022 | CN 114026045 A | 08-02-2022 |
| | | CN 117080405 A | 17-11-2023 |
| | | EP 3992150 A1 | 04-05-2022 |
| | | US 2022271272 A1 | 25-08-2022 |
| | | WO 2020261962 A1 | 30-12-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2022542774 A
- JP 2024511223 A